# FASCICULE DE BREVET EUROPEEN

(11) **EP 1 288 438 B1**
(45) Date de publication et mention de la délivrance du brevet: **24.10.2007**
(21) Numéro de dépôt: 02292029.2
(22) Date de dépôt: 13.08.2002
(51) Int. Cl.: F01D 5/18

(54) **Circuits de refroidissement pour aube de turbine à gaz**
Kühlfluidführung bei einem Gasturbinenschaufelblatt
Cooling fluid flow configuration for a gas turbine blade

(30) Priorité: 28.08.2001 FR 0111189
(43) Date de publication de la demande: 05.03.2003
(73) Titulaire: SNECMA, 75015 Paris (FR)
(72) Inventeur: Eneau, Patrice, 77550 Moissy Cramayel (FR); Picot, Philippe, 77820 Chatelet en Brie (FR)
(74) Mandataire: Boura, Olivier

(56) Documents cités:
- EP-A- 0 661 414
- US-A- 5 165 852
- US-A- 5 356 265
- US-A- 6 036 441
- US-B1- 6 206 638

## Description

### Arrière-plan de l'invention

La présente invention est relative à des perfectionnements apportés aux aubes d'une turbine à gaz de moteur d'avion. Plus particulièrement, elle vise les circuits de refroidissement de ces aubes.

Il est connu que les aubes mobiles d'une turbine à gaz d'un moteur d'avion, et notamment de la turbine haute-pression, sont soumises aux températures très élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Par ailleurs, il est connu qu'une élévation de la température des gaz de la turbine haute-pression permet d'améliorer le rendement d'un moteur, donc le rapport entre la poussée du moteur et le poids d'un avion propulsé par ce moteur. Par conséquent, des efforts sont entrepris afin de réaliser des aubes de turbine qui peuvent résister à des températures de plus en plus élevées.

Afin de résoudre ce problème, il est connu de munir ces aubes de circuits de refroidissement visant à réduire la température de ces dernières. Grâce à de tels circuits, de l'air de refroidissement, qui est généralement introduit dans l'aube par son pied, traverse celle-ci en suivant un trajet formé par des cavités pratiquées dans l'aube avant d'être éjecté par des orifices s'ouvrant à la surface de l'aube.

Cependant, on constate souvent que les échanges thermiques produits par la circulation de cet air de refroidissement dans les cavités de l'aube ne sont pas uniformes et engendrent des gradients de température qui pénalisent la durée de vie de l'aube.

Par ailleurs, l'évacuation de l'air de refroidissement par des émissions positionnées côté extrados est délicate. En effet, les vitesses mises en oeuvre à l'extrados de l'aubage sont élevées de sorte que les pertes résultant du mélange entre l'air de refroidissement et l'air de veine sont importantes et affectent le rendement de la turbine à gaz.

Les publications US 5,165,852 et EP 0 661 414 décrivent des circuits de refroidissement munis de cavités s'étendant radialement du côté intrados et du côté extrados de l'aube.

### Objet et résumé de l'invention

La présente invention vise donc à pallier de tels inconvénients en proposant des perfectionnements apportés aux aubes d'une turbine à gaz, et plus particulièrement aux circuits de refroidissement de ces dernières, de manière à obtenir un champ de température sensiblement uniforme le long des zones refroidies de l'aube tout en s'affranchissant d'émissions du côté extrados.

A cet effet, il est prévu une aube de turbine à gaz d'un moteur d'avion la revendication 1.

Plusieurs circuits de ce type peuvent être positionnés dans la partie centrale de l'aube de manière à assurer son refroidissement. Ces circuits identiques et fonctionnant de façon similaire conduisent à une répartition de température uniforme.

La cavité s'étendant radialement du côté extrados de l'aube possède un rapport de forme élevé qui permet d'accroître les niveaux des transferts thermiques côté extrados. Ces transferts thermiques, amplifiés par la présence de perturbateurs, permettent de s'affranchir d'émissions côté extrados.

En outre, dans le cas d'une aube tournante, l'alimentation du circuit de refroidissement étant du côté du pied de l'aube, la circulation de l'air en direction radiale dans les cavités intrados se fait du pied vers le sommet. Par les effets de la force de Coriolis, l'air a tendance à être plaqué contre les parois des cavités les plus proches de la face externe intrados de l'aube, assurant ainsi un meilleur transfert thermique avec la partie de paroi d'aube la plus chaude. Dans la cavité extrados, l'air s'écoule du sommet vers le pied de l'aube. Les effets de la force de Coriolis permettent aussi d'améliorer le transfert thermique.

De plus encore, pour la fabrication de l'aube par moulage, les noyaux réservant les cavités intrados et la cavité extrados sont reliés entre eux à leurs extrémités par des parties de liaison réservant les passages entre ces cavités. Ainsi, le positionnement du noyau intrados par rapport au noyau extrados peut être aisément maîtrisé, d'où un bon respect des épaisseurs de parois lors de la coulée de l'aube.

Selon une particularité de l'invention, plusieurs circuits de refroidissement centraux indépendants ayant au moins deux cavités intrados communiquant avec au moins une cavité extrados pourront être prévus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe d'une aube équipée des différents circuits de refroidissement selon un mode de réalisation de l'invention ;
- la figure 2 est une vue en coupe de la figure 1 selon la direction II - II ;
- les figures 3a et 3b sont des vues en coupe de la figure 1 respectivement selon les directions IIIA - IIIA et IIIB - IIIB ;
- la figure 4 illustre la circulation de l'air de refroidissement qui est associée aux différents circuits de refroidissement de l'aube de la figure 1.

### Description détaillée d'un mode de réalisation

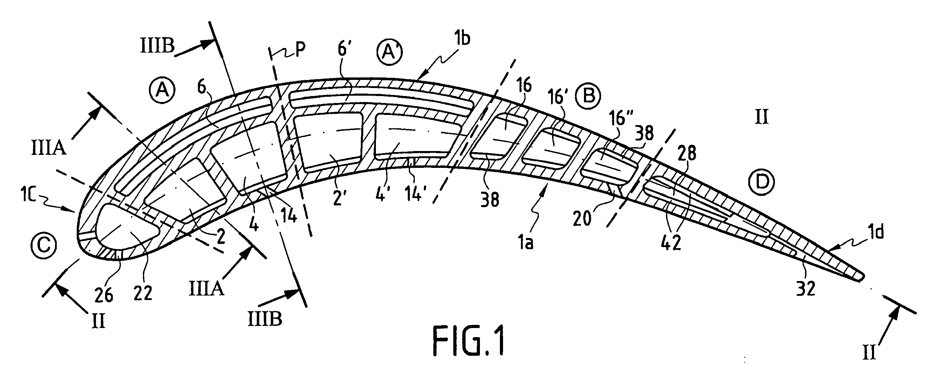

Si on se réfère à la figure 1, on voit que l'aube 1 d'une turbine à gaz d'un moteur d'avion selon un mode de réalisation de la présente invention comporte notamment dans sa partie centrale au moins un premier circuit de refroidissement central A.

De préférence, la partie centrale de l'aube 1 comprend deux circuits de refroidissement centraux A et A' disposés sensiblement symétriquement de part et d'autre d'un plan transversal P afin d'obtenir un champ de température substantiellement uniforme, c'est à dire sans fort gradient thermique, le long des zones refroidies de l'aube. Cette caractéristique permet d'accroître la durée de vie de l'aube.

Chaque circuit de refroidissement central A et A' comporte au moins une première et une deuxième cavités (respectivement 2, 2' et 4, 4') qui s'étendent du côté intrados 1a de l'aube 1, et au moins une cavité 6, 6' s'étendant du côté extrados 1b de l'aube.

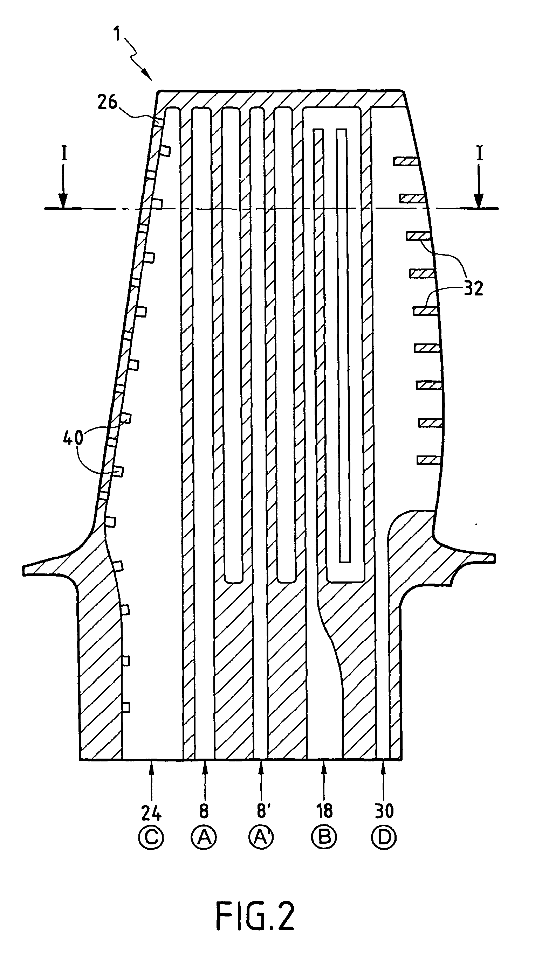

Comme le montre plus précisément la figure 2, une ouverture d'admission d'air 8, 8' est prévue à une extrémité radiale de la première cavité intrados 2, 2' (c'est à dire au niveau du pied de l'aube) pour alimenter chaque circuit de refroidissement central A, A' en air de refroidissement.

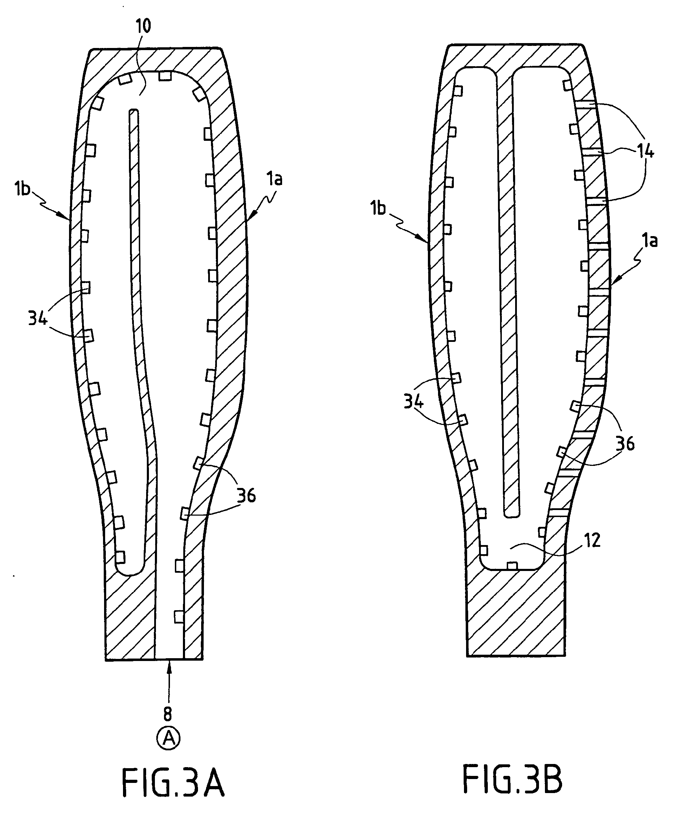

De plus, en se référant aux figures 3a et 3b, on voit qu'un premier passage 10 fait communiquer l'autre extrémité radiale de la première cavité intrados 2 (c'est à dire au niveau du sommet de l'aube) à une extrémité radiale voisine de la cavité extrados 6 du circuit de refroidissement A. Un second passage 12 est également prévu au niveau du pied de l'aube pour faire communiquer l'autre extrémité radiale de la cavité extrados 6 avec une extrémité radiale voisine de la deuxième cavité intrados 4. Des communications similaires sont réalisées entre les cavités 2', 6' et 4' du circuit A'.

Enfin, chaque circuit de refroidissement central A, A' comprend des orifices de sortie 14, 14' de l'air de refroidissement s'ouvrant dans la deuxième cavité intrados 4, 4' et débouchant sur la face intrados 1a de l'aube 1.

Ainsi, l'air de refroidissement alimentant ce ou ces circuit(s) de refroidissement central(aux) A, A' parcourt les cavités intrados 2, 2' et 4, 4' dans une direction radiale opposée à celle dans laquelle il parcourt la cavité extrados 6, 6'.

Avantageusement, la cavité extrados 6, 6' de chaque circuit de refroidissement central A, A' est à rapport de forme élevé de manière à accroître les transferts thermiques internes. Une cavité de refroidissement est considérée comme ayant un rapport de forme élevé lorsque, en coupe transversale, elle présente une dimension (longueur) au moins trois fois supérieure à l'autre (largeur).

Toujours avantageusement, cette même cavité extrados comporte des perturbateurs 34 sur sa paroi externe côté extrados, et les première et deuxième cavités intrados du ou des circuit(s) de refroidissement central(aux) A, A' sont également munies de perturbateurs 36 sur leur paroi externe côté intrados.

Ces perturbateurs 34 et 36 se présentent sous la forme de reliefs positionnés sur les parois des cavités, en travers de l'écoulement de l'air de refroidissement. Ils permettent ainsi de perturber l'écoulement de l'air traversant ces cavités et donc de favoriser les échanges thermiques tout en bénéficiant de pertes de charge optimisées.

Par ailleurs, toujours en se référant à la figure 1, on voit que l'aube 1 comporte également au moins un deuxième circuit de refroidissement B supplémentaire (appelé circuit de refroidissement arrière) indépendant du ou des circuit(s) de refroidissement central (aux) A, A'.

Ce deuxième circuit de refroidissement B comprend au moins une cavité 16, et de préférence plusieurs, par exemple trois cavités 16, 16' et 16", située(s) dans la partie arrière de l'aube 1, une ouverture d'admission d'air 18 au niveau du pied de l'aube pour alimenter le deuxième circuit de refroidissement, et des orifices de sortie 20 débouchant sur la face intrados 1a de l'aube. L'air est admis dans la cavité 16 et des passages font communiquer les cavités 16 et 16' au voisinage du sommet de l'aube et les cavités 16' et 16" au voisinage du pied de l'aube. Les orifices de sortie 20 s'ouvrent dans la cavité 16".

De cette manière, ce deuxième circuit de refroidissement B permet d'assurer le refroidissement de la partie arrière de l'aube 1. Par ailleurs, de façon à améliorer les transferts thermiques le long des parois côtés intrados et extrados des cavités 16, 16', 16", celles-ci comportent avantageusement des perturbateurs 38 positionnés en vis à vis sur leurs parois internes.

Un troisième et un quatrième circuits de refroidissement (respectivement C et D) supplémentaires (appelés respectivement circuit de refroidissement bord d'attaque et circuit de refroidissement bord de fuite) et indépendants des premier et second circuits de refroidissement permettent d'assurer le refroidissement respectivement du bord d'attaque 1c et du bord de fuite 1d de l'aube 1.

Le troisième circuit de refroidissement C est constitué d'au moins une cavité 22 située au voisinage du bord d'attaque 1c de l'aube et d'une ouverture 24 d'admission d'air à une extrémité radiale de la cavité bord d'attaque 22, du côté du pied de l'aube pour alimenter en air de refroidissement ce circuit. Des orifices de sortie 26 s'ouvrent dans cette cavité 22 et débouchent sur le bord d'attaque 1c de l'aube. Ils permettent de former un film d'air de refroidissement sur la paroi extérieure du bord d'attaque.

De préférence, la cavité bord d'attaque 22 est munie de perturbateurs 40 sur sa paroi du côté bord d'attaque de l'aube afin d'accroître les échanges thermiques le long de cette paroi.

Le quatrième circuit de refroidissement D est composé d'au moins une cavité 28 située sur le bord de fuite 1d de l'aube 1, d'une ouverture 30 d'admission d'air à une extrémité radiale de la cavité bord de fuite 28, du côté du pied de l'aube pour alimenter en air de refroidissement ce circuit. Des orifices de sortie 32 s'ouvrent dans cette cavité bord de fuite et débouchent sur le bord de fuite 1d pour assurer le refroidissement de ce dernier.

Avantageusement, la cavité bord de fuite 28 de ce quatrième circuit de refroidissement comporte des perturbateurs 42 sur ses parois côtés intrados et extrados de manière à améliorer les transferts thermiques le long de ces parois.

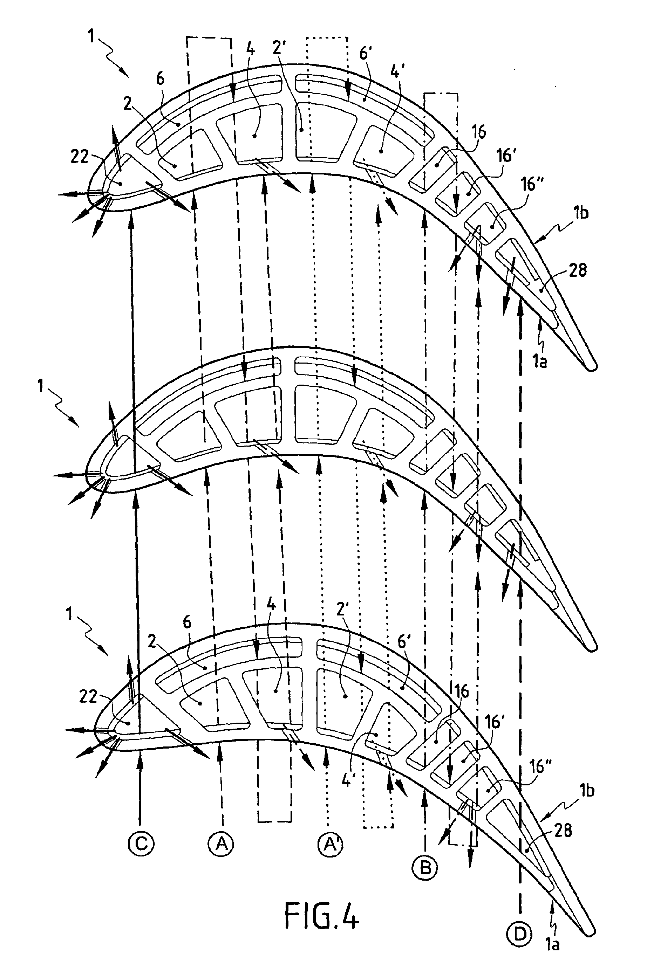

On décrira brièvement le mode de refroidissement de l'aube qui découle de manière évidente de ce qui précède, en se référant plus particulièrement à la figure 4.

Cette figure illustre schématiquement la circulation de l'air de refroidissement qui parcourt les différents circuits A à D de l'aube 1. Ces quatre circuits sont indépendants entre eux puisqu'ils possèdent chacun une alimentation directe en air de refroidissement.

Le premier circuit de refroidissement central A est alimenté en air de refroidissement par la première cavité intrados 2. L'air de refroidissement parcourt ensuite la cavité extrados 6 puis la deuxième cavité intrados 4 avant d'être émis à l'intrados de l'aube par les orifices de sortie 14 équipant cette cavité.

Lorsqu'il est avantageusement prévu deux circuits de refroidissement centraux A et A', la circulation de l'air de refroidissement dans le circuit A's'effectue de façon similaire.

Ainsi, suivant la disposition particulière de ce ou ces circuit(s) central(aux), l'air de refroidissement monte (du pied vers le sommet de l'aube) dans les cavités intrados et descend dans la cavité extrados.

Des circulations d'air en sens opposés du côté intrados et du côté extrados dans les circuits A et A', ainsi que la présence avantageuse de deux circuits de refroidissement disposés substantiellement symétriquement dans la partie centrale de l'aube contribuent à l'obtention d'un champ de température sensiblement uniforme c'est à dire sans fort gradient thermique. La durée de vie des aubes est ainsi accrue.

Par ailleurs, le ou les circuit(s) de refroidissement A, A' ne présente(nt) pas de sortie émission d'air du côté extrados de l'aube, ce qui évite les problèmes de répartition de l'air à des vitesses élevées.

Du fait que l'air de refroidissement circule du pied vers le sommet de l'aube dans les cavités intrados, il est plaqué contre les parois externes de ces cavités par l'effet de la force de Coriolis. Les transferts thermiques sont alors favorisés le long de ces parois externes, assurant ainsi un meilleur refroidissement de la paroi externe chaude du côté intrados de l'aube.

De plus, l'air de refroidissement descend dans les cavités côté extrados. Les effets de la force de Coriolis permettent également de bénéficier de niveaux d'échanges thermiques augmentés assurant ainsi un meilleur refroidissement de la paroi externe de l'aube côté extrados.

Le refroidissement de l'extrados de l'aube étant assuré par des cavités extrados à rapport de forme élevé, cela permet d'accroître les niveaux de transfert thermique externes, lesquels sont en plus amplifiés par la présence de perturbateurs sur les parois externes des cavités.

Par ailleurs, la partie arrière de l'aube 1 est refroidie par le deuxième circuit de refroidissement B comportant avantageusement trois cavités 16, 16' et 16". Comme le montre la figure 4, l'air de refroidissement alimente une cavité 16, un retournement en sommet d'aube renvoie celui-ci dans la cavité 16' puis l'air alimente la cavité montante 16" avant d'être émis à l'intrados de l'aube 1 par des orifices de sortie 20.

Le refroidissement du bord d'attaque 1c de l'aube 1 est assuré par la cavité bord d'attaque 22 équipée d'une alimentation directe en air de refroidissement, et celui du bord de fuite 1d par la cavité bord de fuite 28 également alimentée directement en air de refroidissement.

L'aube 1 selon ce mode de réalisation de l'invention est réalisée par moulage, les emplacements des cavités étant classiquement réservés par des noyaux disposés parallèlement entre eux dans le moule avant la coulée du métal. Dans les circuits A et A', ces noyaux sont reliés entre eux à leur extrémité par des parties de liaison réservant les passages entre les cavités. Ainsi, le positionnement des noyaux peut être aisément maîtrisé, d'où un bon respect des épaisseurs de paroi lors de la coulée de l'aube.

Il demeure bien entendu que la présente invention n'est pas limitée aux exemples de réalisation décrits ci-dessus mais qu'elle en englobe toutes les variantes. Notamment, de tels circuits de refroidissement peuvent être installés sur des aubes aussi bien mobiles que fixes.

## Revendications

1. Aube (1) de turbine à gaz d'un moteur d'avion, comportant dans sa partie centrale au moins un premier circuit de refroidissement central (A) comprenant une première (2) et une deuxième (4) cavités s'étendant radialement du côté intrados (1a) de l'aube (1), une cavité (6) s'étendant du côté extrados (1b) de l'aube, une ouverture (8) d'admission d'air à une extrémité radiale de la première cavité intrados (2) pour alimenter le circuit de refroidissement central (A) en air de refroidissement, un premier passage (10) faisant communiquer l'autre extrémité radiale de la première cavité intrados (2) à une extrémité radiale voisine de la cavité extrados (6), un second passage (12) faisant communiquer l'autre extrémité radiale de la cavité extrados avec une extrémité radiale voisine de la deuxième cavité intrados (4), et des orifices de sortie (14) s'ouvrant dans la deuxième cavité intrados et débouchant sur la face intrados (1a) de l'aube, **caractérisée en ce qu'**elle comporte en outre au moins un circuit de refroidissement arrière (B) indépendant du ou des circuit(s) de refroidissement central(aux), comprenant au moins une cavité (16) située dans la partie arrière de l'aube (1), une ouverture (18) d'admission d'air à une extrémité radiale de la cavité (16) pour alimenter le circuit de refroidissement arrière (B), et des orifices de sortie (20) s'ouvrant dans ladite cavité et débouchant sur la face intrados (1a) de l'aube, et au moins un circuit de refroidissement bord de fuite (D) indépendant des circuits de refroidissement centraux (A) et arrière (B), comprenant au moins une cavité (28) située au voisinage du bord de fuite (1d) de l'aube (1), une ouverture (30) d'admission d'air à une extrémité radiale de la cavité bord de fuite (28) pour alimenter le circuit de refroidissement bord de fuite (D), et des orifices (32) de sortie s'ouvrant dans ladite cavité bord de fuite et débouchant sur le bord de fuite (1d) de l'aube.

2. Aube selon la revendication 1, **caractérisée en ce qu'**elle comporte en outre au moins un circuit de refroidissement bord d'attaque (C) indépendant des circuits de refroidissement centraux (A), arrière (B) et bord de fuite (D), comprenant au moins une cavité (22) située au voisinage du bord d'attaque (1c) de l'aube (1), une ouverture (24) d'admission d'air à une extrémité radiale de la cavité bord d'attaque (22) pour alimenter le circuit de refroidissement bord d'attaque (C), et des orifices (26) de sortie s'ouvrant dans ladite cavité bord d'attaque et débouchant sur le bord d'attaque (1c) de l'aube.

3. Aube selon la revendication 2, **caractérisée en ce que** la cavité bord d'attaque (22) du circuit de refroidissement bord d'attaque (C) comporte des perturbateurs (40) sur sa paroi côté bord d'attaque (1c) de l'aube (1) de manière à accroître les transferts thermiques le long de cette paroi.

4. Aube selon l'une quelconque des revendications précédentes, **caractérisée en ce que** la cavité extrados (6) du circuit de refroidissement central (A) est à rapport de forme élevé de manière à accroître les transferts thermiques internes.

5. Aube selon l'une quelconque des revendications précédentes, **caractérisée en ce que** la cavité extrados (6) du circuit de refroidissement central (A) comporte des perturbateurs (34) sur sa paroi externe côté extrados de manière à accroître les transferts thermiques le long de cette paroi tout en conservant des pertes de charge optimisées.

6. Aube selon l'une quelconque des revendications précédentes, **caractérisée en ce que** les première et deuxième cavités intrados (2, 4) du circuit de refroidissement central (A) comportent des perturbateurs (36) sur leur paroi externe côté intrados de manière à accroître les transferts thermiques le long de ces parois tout en conservant des pertes de charge optimisées.

7. Aube selon l'une quelconque des revendications précédentes, **caractérisée en ce que** la cavité (16) du circuit de refroidissement arrière (B) comporte des perturbateurs (38) positionnés en vis à vis sur ses parois côtés intrados et extrados de manière à améliorer les transferts thermiques le long de ces parois.

8. Aube selon l'une quelconque des revendications précédentes, **caractérisée en ce que** la cavité bord de fuite (28) du circuit de refroidissement bord de fuite (D) comporte des perturbateurs (42) sur ses parois côtés intrados et extrados de manière à accroître les transferts thermiques le long de ces parois.

9. Aube selon l'une quelconque des revendications précédentes, **caractérisée en ce qu'**elle comporte au moins deux circuits de refroidissement centraux (A, A') substantiellement symétriques de façon à obtenir un champ de température sensiblement uniforme dans la partie centrale de l'aube (1).

10. Aube selon l'une quelconque des revendications précédentes, **caractérisée en ce qu'**elle est réalisée par moulage, les emplacements des cavités intrados et extrados étant réservés par des noyaux disposés parallèlement et reliés entre eux à leur extrémité afin de réserver des passages entre les cavités et de garantir un positionnement maîtrisé des noyaux entre eux.

## Claims

1. A gas turbine blade (1) for an airplane engine, the blade comprising in its central portion at least a first central cooling circuit (A) comprising first and second cavities (2, 4) extending radially on the concave side (1a) of the blade (1), one cavity (6) extending on the convex side (1b) of the blade, an air admission opening (8) at a radial end of the first concave side cavity (2) for feeding the central cooling circuit (A) with cooling air, a first passage (10) putting the other radial end of the first concave side cavity (2) into communication with an adjacent radial end of the convex side cavity (6), a second passage (12) putting the other radial end of the convex side cavity into communication with an adjacent radial end of the second concave side cavity (4), and outlet orifices (14) opening out into the second concave side cavity and through the concave face (1a) of the blade, the blade being **characterised in that** it further comprises at least one rear cooling circuit (B) independent of the central cooling circuit(s), the rear cooling circuit comprising at least one cavity (16) situated in the rear portion of the blade (1), an air admission opening (18) at a radial end of the cavity (16) to feed the rear cooling circuit (B), and outlet orifices (20) opening out into said cavity and through the concave face (1a) of the blade, and at least one trailing edge cooling circuit (D) independent of the central and rear cooling circuits (A, B), the trailing edge cooling circuit comprising at least a cavity (28) situated in the vicinity of the trailing edge (1d) of the blade (1), an air admission opening (30) at a radial end of the trailing edge cavity (28) to feed the trailing edge cooling circuit (D), and outlet orifices (32) opening out into said trailing edge cavity and through the trailing edge (1d) of the blade.

2. A blade according to claim 1, **characterised in that** it further comprises at least one leading edge cooling circuit (C) independent of the central, rear, and trailing edge cooling circuits (A, B, D), the leading edge cooling circuit comprising at least a cavity (22) situated in the vicinity of the leading edge (1c) of the blade (1), an air admission opening (24) at a radial end of the leading edge cavity (22) to feed the leading edge cooling circuit (C), and outlet orifices (26) opening out into said leading edge cavity and through the leading edge (1c) of the blade.

3. A blade according to claim 2, **characterised in that** the leading edge cavity (22) of the leading edge cooling circuit (C) has baffles (40) on its wall beside the leading edge (1c) of the blade (1) so as to increase heat transfer along said wall.

4. A blade according to any one of the preceding claims, **characterised in that** the convex side cavity (6) of the central cooling circuit (A) has an aspect ratio that is large so as to increase internal heat transfer.

5. A blade according to any one of the preceding claims, **characterised in that** the convex side cavity (6) of the central cooling circuit (A) includes baffles (34) on its outer wall beside the convex face so as to increase heat transfer along said wall while maintaining optimized head losses.

6. A blade according to any one of the preceding claims, **characterised in that** the first and second concave side cavities (2, 4) of the central cooling circuit (A) include baffles (36) on their outer wall beside the concave face so as to increase heat transfer along said walls while maintaining optimized head losses.

7. A blade according to any one of the preceding claims, **characterised in that** the cavity (16) of the rear cooling circuit (B) has baffles (38) placed facing one another on its concave and convex side walls in such a manner as to improve heat transfer along said walls.

8. A blade according to any one of the preceding claims, **characterised in that** the trailing edge cavity (28) of the trailing edge cooling circuit (D) has baffles (42) on its concave and convex side walls so as to increase heat transfer along said walls.

9. A blade according to any one of the preceding claims, **characterised in that** it has at least two central cooling circuits (A, A') that are substantially symmetrical so as to obtain a temperature field that is substantially uniform in the central portion of the blade (1).

10. A blade according to any one of the preceding claims, **characterised in that** it is made by moulding, the locations of the concave side and convex side cavities being defined by cores placed in parallel and interconnected at their ends so as to define passages between the cavities and so as to guarantee that the cores are properly positioned relative to one another.

## Patentansprüche

1. Gasturbinenschaufel (1) eines Flugzeugmotors, die in ihrem mittleren Bereich wenigstens einen ersten mittleren Kühlkreis (A) aufweist, der einen ersten Hohlraum (2) und einen zweiten Hohlraum (4), die sich radial auf der Vorderseite (1a) der Schaufel (1) erstrecken, einen Hohlraum (6), der sich auf der Rückseite (1 b) der Schaufel erstreckt, eine Luftzufuhröffnung (8) an einem radialen Ende des ersten vorderseitigen Hohlraums (2), um den mittleren Kühlkreis (A) mit Kühlluft zu beaufschlagen, einen ersten Durchgang (10), der das andere radiale Ende des ersten vorderseitigen Hohlraums (2) mit einem dem rückseitigen Hohlraum (6) benachbarten radialen Ende verbindet, einen zweiten Durchgang (12), welcher das andere radiale Ende des rückseitigen Hohlraums mit einem dem zweiten vorderseitigen Hohlraum (4) benachbarten radialen Ende verbindet, sowie Austrittsöffnungen (14) umfaßt, die sich in den zweiten vorderseitigen Hohlraum öffnen und an der Vorderseite (1a) der Schaufel ausmünden, **dadurch gekennzeichnet, daß** sie ferner wenigstens einen hinteren Kühlkreis (B), der von dem oder den mittleren Kühlkreis(en) unabhängig ist und der wenigstens einen im hinteren Teil der Schaufel (1) befindlichen Hohlraum (16), eine Luftzufuhröffnung (18) an einem radialen Ende des Hohlraums (16), um den hinteren Kühlkreis (B) zu beaufschlagen, sowie Austrittsöffnungen (20) umfaßt, die sich in den genannten Hohlraum öffnen und an der Vorderseite (1a) der Schaufel ausmünden, sowie wenigstens einen Austrittskanten-Kühlkreis (D) aufweist, der von den mittleren Kühlkreisen (A) und dem hinteren Kühlkreis (B) unabhängig ist und der wenigstens einen in der Nähe der Austrittskante (1 d) der Schaufel (1) befindlichen Hohlraum (28), eine Luftzufuhröffnung (30) an einem radialen Ende des Austrittskantenhohlraums (28), um den Austrittskanten-Kühlkreis (D) zu beaufschlagen, sowie Austrittsöffnungen (32) umfaßt, die sich in den genannten Austrittskantenhohlraum öffnen und an der Austrittskante (1 d) der Schaufel ausmünden.

2. Schaufel nach Anspruch 1, **dadurch gekennzeichnet, daß** sie weiterhin wenigstens einen Eintrittskanten-Kühlkreis (C) aufweist, der von den mittleren Kühlkreisen (A), dem hinteren Kühlkreis (B) und dem Austrittskanten-Kühlkreis (D) unabhängig ist und der wenigstens einen in der Nähe der Eintrittskante (1 c) der Schaufel (1) befindlichen Hohlraum (22), eine Luftzufuhröffnung (24) an einem radialen Ende des Eintrittskantenhohlraums (22), um den Eintrittskanten-Kühlkreis (C) zu beaufschlagen, sowie Austrittsöffnungen (26) umfaßt, die sich in den genannten Eintrittskantenhohlraum öffnen und an der Eintrittskante (1c) der Schaufel ausmünden.

3. Schaufel nach Anspruch 2, **dadurch gekennzeichnet, daß** der Eintrittskantenhohlraum (22) des Eintrittskanten-Kühlkreises (C) an seiner auf der Seite der Eintrittskante (1 c) gelegenen Wand der Schaufel (1) Störelemente (40) aufweist, so daß die Wärmeübertragungen entlang dieser Wand erhöht werden.

4. Schaufel nach irgendeinem der vorhergehenden Ansprüche, **dadurch gekennzeichnet, daß** der rückseitige Hohlraum (6) des mittleren Kühlkreises (A) ein hohes Längen-Breiten-Verhältnis aufweist, so daß die inneren Wärmeübertragungen erhöht werden.

5. Schaufel nach irgendeinem der vorhergehenden Ansprüche, **dadurch gekennzeichnet, daß** der rückseitige Hohlraum (6) des mittleren Kühlkreises (A) an seiner rückseitigen Außenwand Störelemente (34) aufweist, so daß die Wärmeübertragungen entlang dieser Wand erhöht werden und gleichzeitig optimierte Druckverluste erhalten bleiben.

6. Schaufel nach irgendeinem der vorhergehenden Ansprüche, **dadurch gekennzeichnet, daß** der erste und der zweite vorderseitige Hohlraum (2, 4) des mittleren Kühlkreises (A) an ihrer vorderseitigen Außenwand Störelemente (36) umfassen, so daß die Wärmeübertragungen entlang dieser Wände erhöht werden und gleichzeitig optimierte Druckverluste erhalten bleiben.

7. Schaufel nach irgendeinem der vorhergehenden Ansprüche, **dadurch gekennzeichnet, daß** der Hohlraum (16) des hinteren Kühlkreises (B) Störelemente (38) aufweist, die an seinen vorderseitigen und rückseitigen Wänden einander gegenüberliegend angeordnet sind, so daß die Wärmeübertragungen entlang dieser Wände verbessert werden.

8. Schaufel nach irgendeinem der vorhergehenden Ansprüche, **dadurch gekennzeichnet, daß** der Austrittskantenhohlraum (28) des Austrittskanten-Kühlkreises (D) an seinen vorderseitigen und rückseitigen Wänden Störelemente (42) aufweist, so daß die Wärmeübertragungen entlang dieser Wände erhöht werden.

9. Schaufel nach irgendeinem der vorhergehenden Ansprüche, **dadurch gekennzeichnet, daß** sie wenigstens zwei mittlere Kühlkreise (A, A') umfaßt, die im wesentlichen symmetrisch sind, so daß eine im wesentlichen gleichmäßige Temperaturverteilung im mittleren Teil der Schaufel (1) erzielt wird.

10. Schaufel nach irgendeinem der vorhergehenden Ansprüche, **dadurch gekennzeichnet, daß** sie durch Formen hergestellt wird, wobei die Stellen der vorderseitigen und rückseitigen Hohlräume durch Kerne belegt sind, die parallel angeordnet und an ihrem Ende miteinander verbunden sind, um zwischen den Höhlräumen Durchgänge freizuhalten und um ein kontrolliertes Positionieren der Kerne untereinander sicherzustellen.
